# EUROPEAN PATENT APPLICATION

(11) **EP 3 141 425 A1**
(43) Date of publication of application: **15.03.2017**
(21) Application number: 15723731.4
(22) Date of filing: 16.04.2015
(51) Int. Cl.: B60Q 1/12, B62J 6/02, B60Q 1/115, B60Q 1/076

(54) **METHOD AND ELECTROMECHANICAL DEVICE FOR STABILISING THE FRONT LIGHTING OF A MOTORCYCLE**

(30) Priority: 07.05.2014 ES 201430662
(71) Applicant: Sáez López, Rubén, 48902 Barakaldo (Bizkaia) (ES)
(72) Inventor: Sáez López, Rubén, 48902 Barakaldo (Bizkaia) (ES)
(74) Representative: Cueto, Sénida
(86) International application number: PCT/ES2015/070307
(87) International publication number: WO 2015/169986

(57) **Abstract**

Method and electromechanical device (1) for stabilizing the front lighting of a motorcycle provided with a front lighting device (2). The electromechanical device (1) comprises a sensor set (3) for detecting the lateral tilting angle experienced by the motorcycle on taking a curve and a motor (4) to drive the gear system (8). The gear system (8) forces the lighting device (2) to turn a rotation angle that compensates the lateral tilting experienced by the motorcycle. In this way, by means of the electromechanical device (1) of the invention, an appropriate distribution of the front lighting of the motorcycle is maintained throughout the entire straight-line or curvilinear path, without the need to add additional lighting devices and in accordance with the prevailing regulation regarding front lighting devices.

## Description

### Field of the Invention

The invention relates to a method and an electromechanical device for stabilizing the illumination produced by the front light of a motorcycle.

### Prior Art

At present, a moped or motorcycle must be equipped with an illumination system or set of lighting devices appropriately mounted or installed on the front, side and rear of the motorcycle. These lighting devices improve the luminosity of the motorcycle, offering increased safety when riding the motorcycle, particularly in low visibility conditions. In turn, this increase in the motorcycle's luminosity provides the rest of the road users and drivers with information regarding the presence, position, size or direction of the motorcycle as well as information regarding the intentions of the motorcyclist in terms of route and speed.

Normally, the front lighting of the motorcycle is provided by means of short and long-range headlamps or lighting devices, supplemented with fog lights or other additional headlamps. More specifically, a short-range lighting device, also known as dipped light, serves to provide an appropriate front distribution of light or light beams generated by the lighting device. Furthermore, this lighting distribution must not dazzle other road users. However, diverse situations may arise whilst riding that vary the lighting distribution provided by the lighting devices, which translates into inadequate road lighting. At present, available front lighting devices for motorcycles present a lack of road adaptation in certain situations, whereby lack of adaptation is understood to be inadequate lighting distribution provided by these lighting devices.

A first common situation in which there is an inadequate distribution of the motorcycle's front lighting occurs when the motorcyclist deviates from a straight-line path, on turning the motorcycle to the left or to the right to take a curve. On turning, the motorcycle experiences a lateral tilting angle with respect to the vertical position. This lateral tilting angle modifies the lighting distribution on the road so that the lighting distribution also moves or tilts towards the left or the right, coinciding with the direction of the turning movement. In consequence, there is an inadequate distribution of the front lighting which may lead to visibility problems of the road layout and/or traffic signals, as well as potentially dazzling drivers that may be on the road at that moment. In the aforementioned situation, the road safety of the motorcyclist and other drivers is endangered.

A second common situation in which there is an inadequate distribution of the motorcycle's front lighting occurs during acceleration of the motorcycle. During positive acceleration, the front of the motorcycle lifts slightly with respect to the horizontal position. This lifting of the front of the motorcycle causes upward pitching of the distribution of the front lighting, which may dazzle another road user travelling in the opposite direction. On the other hand, during negative acceleration or braking, the front of the motorcycle lowers slightly with respect to the horizontal position. This lowering of the front of the motorcycle causes downward pitching of the distribution of the front lighting, which causes insufficient lighting throughout the braking distance.

Some solutions to the first problem of lack of appropriate adaptation of the front lighting distribution, which occurs when the motorcycle makes a turning movement, are known.

For example, some motorcycle models available on the market incorporate electric mirrors in the front lighting device or dipped beam in order to modify the lighting distribution when the motorcycle takes a curve. These electric mirrors reflect part of the light generated inside the lighting device towards the exterior of the lighting device, similarly to a periscope. However, these systems are not very compact, as they take up considerable space inside the lighting device and are therefore not applicable to most motorcycles.

Another known solution, also based on redirecting part of the light generated by the lighting device, is the system described in Patent No. US5599085. This mechanical system modifies and moves certain areas of some light reflectors in the lighting device in order to direct part of the light to compensate the lack of lighting on certain parts of the road due to the lateral tilting of the motorcycle when taking bends. A limitation of the disclosed solution is that it does not provide constant lighting distribution, producing areas of shadow or areas with insufficient lighting on the road.

Other systems are also known, based on adding auxiliary lighting devices to the motorcycle in order to compensate for the lack of lighting that occurs as a result of the lateral tilting of the motorcycle when taking curves. Patent No. US8550673 describes a system of this type, based on incorporating auxiliary lighting devices around the sides of the motorcycle. However, an important limitation of this solution is that these auxiliary lighting devices are not contemplated in the European Union regulation UNECE Reg. 53. Therefore, these auxiliary lighting devices are not approved to be installed and used on motorcycles in the European Union.

The aim of the invention is to provide a method and a device to ensure the adequate distribution of a motorcycle's front lighting when turning to the left or right. It is also the aim of the invention to propose an approved device in accordance with the prevailing regulations in all markets worldwide. Furthermore, at least one embodiment for the device as per the invention should improve the inadequate distribution of the motorcycle's front lighting when accelerating, whether it be positively or negatively (i.e. braking).

### Brief Description of the Invention

The object of the invention is a method and an electromechanical device for stabilizing the front lighting of a motorcycle fitted with a front lighting device that emits a light beam. The electromechanical device presents the particularity of comprising: a sensor set that comprises tilting angle sensors for detecting a lateral tilting angle α experienced by the motorcycle; a processing unit, electrically linked to the sensor set , which comprises a memory that stores instructions to generate a coded signal based on the lateral tilting angle α detected by the sensor set; a motor comprising a rotating shaft arranged in a longitudinal direction, wherein the shaft has an adjustable angular position based on the coded signal generated by the processing unit; and a gear system coupled to the motor shaft, wherein the gear system comprises a connection element for connecting the electromechanical device to the lighting device to rotate jointly, and wherein the gear system is configured to transmit a rotation of the motor shaft to a rotation of the connection element.

The functioning of the electromechanical device as per the invention presents the particularity that, as of a certain lateral tilting angle α detected by the sensor set, the processing unit calculates a rotation angle α₁. This rotation angle α₁ is transmitted to the motor shaft via the coded signal so that the rotating motor shaft drags the gear system, which, in turn, forces the lighting device to turn a rotation angle α₂. In this way, by having the lighting device turns an angle α₂, the adverse effect in the lighting distribution when the motorcycle tilts to take curves to the left or right is automatically compensated and corrected. Thanks to this automatic correction or adaptation, adequate lighting distribution is achieved throughout the motorcycle's path, no matter whether it is straight or curvilinear. Therefore, an electromechanical device as per the invention provides a mechanism for stabilizing the distribution of the motorcycle front lighting.

The fact that the entire lighting device turns a rotation angle α₂ to compensate the variation of the lighting distribution causes all of the lighting distribution to be re-directed in the appropriate direction. This represents an improvement with respect to the known solutions based on re-directing part of the lighting distribution generated by the lighting device through certain areas, mirrors or other reflective components of the lighting device. This improved adaptation or stabilization of the front lighting minimizes the risk of accidents caused by a lack of visibility when the lighting distribution is varied. Furthermore, the fact that the entire lighting device rotates with the electromechanical device means that the lighting distribution is maintained horizontally regardless of whether the motorcycle is tilted or not.

On the other hand, using the electromechanical device described herein, stabilization of the front lighting is achieved without the need to add additional lighting devices. Thus, the solution as per the invention represents an alternative that complies with prevailing regulations in the European Union and rest of the world markets.

Because a connection element is included, different lighting devices can be connected to the electromechanical device as per the invention. This versatility of the electromechanical device represents a huge advantage as it enables the stabilizing function of the electromechanical device to be used with different lighting devices available on the market.

In a particularly advantageous embodiment of the electromechanical device, a second motor is included to cause the lighting device to rotate to an angle that compensates a certain positive or negative acceleration of the motorcycle. This characteristic enables the the front lighting distribution to be stabilized in acceleration situations, which are particularly critical, significantly reducing risk of accident. These acceleration situations are referred to as particularly critical in terms of road safety, as a positive acceleration situation is a moment at which the motorcyclist has reduced reaction capacity due to the increased speed. Likewise, a negative acceleration situation occurs when the motorcyclist activates a brake whilst the motorcycle is travelling, often, at high speed. In these situations, in which there is a lower manoeuvring capacity in the event of unforeseen circumstances, having adequate lighting distribution is particularly advantageous.

In short, the present invention provides a device and method that automatically maintain and stabilize the motorcycle's front lighting distribution not only when the motorcycle turns to take curves, but also in acceleration and braking phases.

### Brief Description of the Figures

The details of the invention can be seen in the accompanying figures, which do not intend to limit the scope of the invention:
- Figure 1 illustrates an inadequate lighting situation when the motorcyclist takes a curve to the right.
- Figure 2 illustrates the front lighting stabilization that is required when the motorcycle is in the situation of Figure 1.
- Figure 3 illustrates an inadequate lighting situation when the motorcyclist takes a curve to the left.
- Figure 4 illustrates the front lighting stabilizaiton that is required when the motorcycle is in the situation of Figure 3.
- Figure 5 shows a perspective view of a first embodiment of the electromechanical device in accordance with the invention, capable of stabilizing the lighting illustrated in Figures 2 and 4.
- Figure 6 shows a block diagram of the functioning of the electromechanical device of Figure 5.
- Figure 7 shows a detailed exploded view of the electromechanical device of Figure 5.
- Figure 8 shows a rear view of the gear system of the electromechanical device of Figure 5 in a rest position.
- Figure 9 shows a rear view of the gear system of the electromechanical device of Figure 5 when the gear system is rotating in order to compensate the lateral tilting α of the motorcycle on taking a curve to the left.
- Figure 10 shows a rear view of the gear system of the electromechanical device of Figure 5 when the gear system rotates in order to compensate the lateral tilting α of the motorcycle on taking a curve to the right.
- Figure 11 shows a detailed perspective view of the connection between the electromechanical device of Figure 5 and a lighting device.
- Figure 12 shows a perspective view of a second embodiment of the electromechanical device, fitted with a second motor.
- Figure 13 illustrates the front lighting stabilization achieved by means of the electromechanical device of Figure 12 when the motorcycle is accelerating.
- Figure 14 illustrates the front lighting stabilization achieved by means of the electromechanical device of Figure 12 when the motorcycle is braking.
- Figure 15 shows a perspective view of a structural detail of the electromechanical device of Figure 12.

### Detailed Description of the Invention

The invention is related to a device for stabilizing the front lighting of a motorcycle, wherein this front lighting comprises a lighting device generating a lighting distribution or light beam. When a conventional motorcycle experiences a lateral tilting angle α with respect to the vertical position as a result of a turning movement, this lighting distribution tends to be unintentionally modified or undergo undesired variations, deteriorating visibility conditions. The invention is also related to a stabilization method that uses this device.

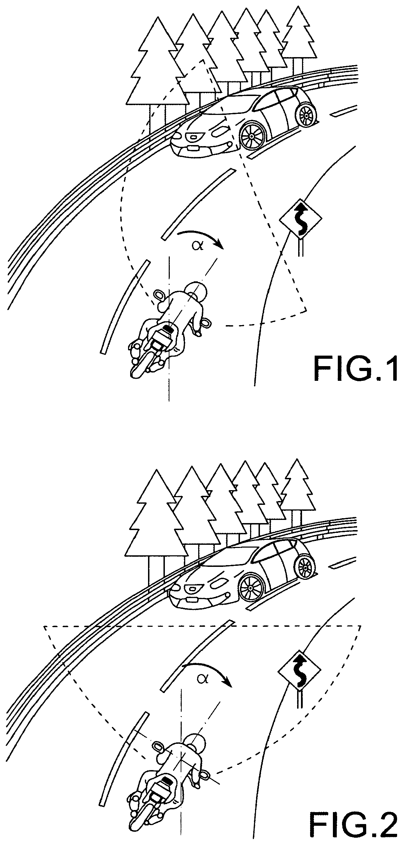

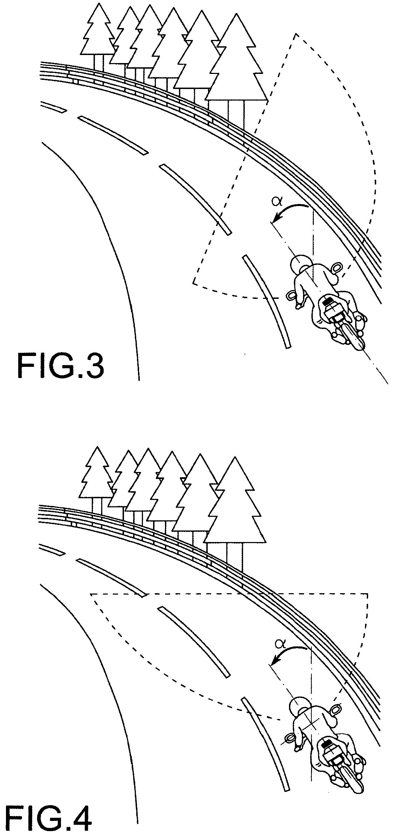

Figures 1 to 4 illustrate the problem that arises, in relation to the modification of the front lighting distribution, when the motorcycle makes a turning movement. As can be observed in Figure 1, when the motorcyclist deviates from a straight-line path to turn to the right, the motorcycle experiences a lateral tilting angle α with respect to the vertical position. This lateral tilting angle α causes the lighting distribution on the road on which the motorcycle is travelling to be altered, in such a way that this lighting distribution is also deviated or tilted towards the right; as a result, as shown in Figure 1, an inadequate lighting distribution occurs that may lead to a lack of visibility of the road layout and/or traffic signals, as well as to the dazzling of drivers that may be travelling in the opposite direction on the left-hand side of the road. Figure 2 shows the lighting distribution required to ride with adequate safety conditions in the situation of Figure 1. As shown in Figure 3, when the motorcyclist deviates from a straight-line path to turn to the left, the motorcycle experiences an anti-clockwise lateral tilting angle α with respect to the vertical position. This lateral tilting angle α causes the lighting distribution to be deviated or tilted towards the left; as a result, an inadequate lighting distribution occurs that may lead to visibility problems of the road layout and traffic signalling, as well as to the dazzling of drivers that may be stopped on the right-hand hard shoulder. Figure 4 shows the lighting distribution required to ride with adequate safety conditions in the situation of Figure 3.

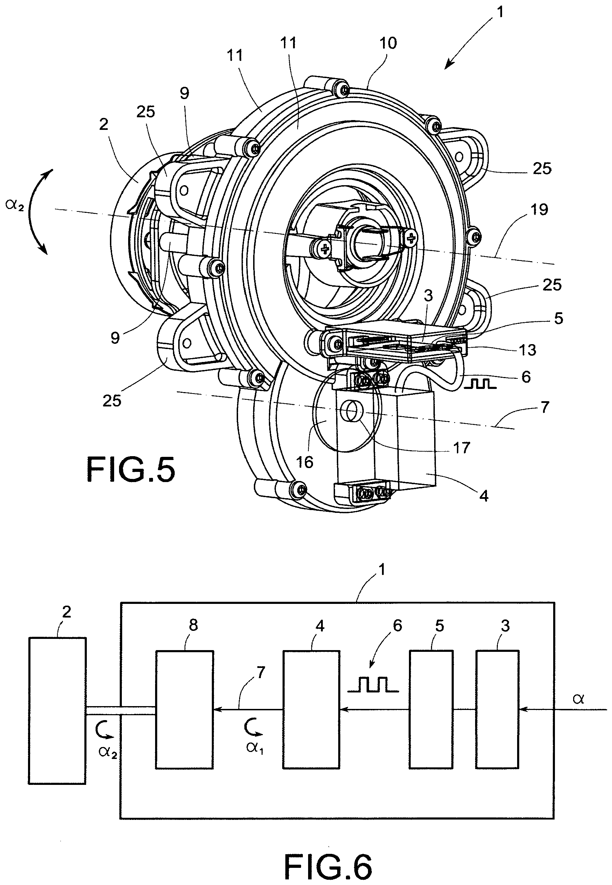

Figure 5 shows a perspective view of a first embodiment of the electromechanical device (1) as per the invention, which aims to stabilize the distribution of the front lighting provided by a lighting device (2). This lighting device (2) emits a light beam which generates a lighting distribution that tends to be unintentionally modified or undergo undesired variations when the motorcycle experiences a lateral tilting angle α with respect to the vertical position as a result of a turning movement. As shown in Figure 5, the electromechanical device (1) as per the invention presents the particularity of comprising a sensor set (3) capable of detecting the lateral tilting angle α experienced by the motorcycle when turning.

Preferably, the sensor set (3) of the electromechanical device (1) comprises accelerometers and gyroscopes. The accelerometers and gyroscopes constitute an inertial measurement unit which functions like those used in navigation systems or inertial guide systems, and in other known applications. These inertial systems allow a processor or processing unit to follow the position of a device or vehicle through dead reckoning. The accelerometers measure the inertial acceleration and the gyroscopes measure the angular or rotational changes with respect to an orthogonal coordinate system. Both the accelerometers and the gyroscopes work together to detect accelerations, decelerations (i.e. braking), turning and tilting with respect to a known initial position. Thus, in the electromechanical device (1) shown in Figure 5, the lateral tilting angle α of the motorcycle is detected by means of the joint work of the accelerometers and gyroscopes.

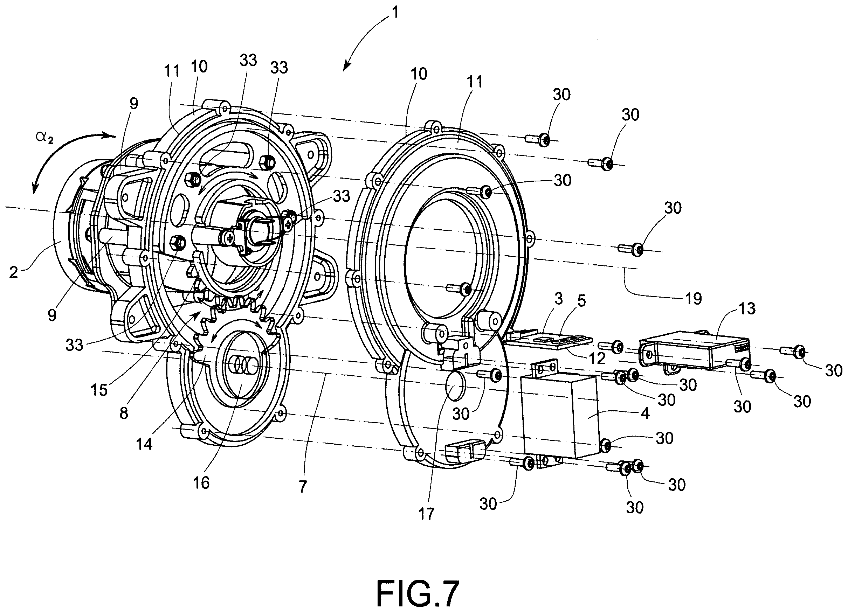

The electromechanical device (1) also presents the particularity of comprising a motor (4) and a processing unit (5) which is electrically linked to the sensor set (3). The processing unit (5) comprises a memory that stores instructions to generate a coded signal (6) based on the lateral tilting angle α detected by the sensor set (3). The motor (4) comprises a rotating shaft (7) arranged in a longitudinal direction, whereby the angular position of this shaft (7) is adjustable by means of the coded signal (6) generated by the processing unit (5). The electromechanical device (1) as per the invention is also characterised in having a gear system (8) (shown in Figures 7 to 11). This gear system (8) is coupled to the shaft (7) of the motor (4), and comprises a connection element (9) which enables the electromechanical device (1) to be connected to the lighting device (2). Furthermore, the gear system (8) is configured to transmit a rotation of the shaft (7) of the motor (4) to a rotation of the connection element (9).

Figure 6 shows a block diagram of the functioning of the electromechanical device (1) in Figure 5. From a certain lateral tilting angle α detected by the sensor set (3), the processing unit (5) calculates a rotation angle α₁ and transmits a coded signal (6) to the shaft (7) of the motor (4), the signal indicating the calculated rotation angle α₁. The motor (4) has control electronics capable of decoding the coded signal (6) and transmitting the rotation angle α₁ to the shaft (7). When rotating, the shaft (7) drags the gear system (8), which, in turn, causes the lighting device (2) to turn an angle equal to the rotation angle α₂. The turning of the lighting device (2) is possible because the lighting device (2) is united, connected or assembled to the electromechanical device (1) by means of the connection element (9). Thus, the electromechanical device (1) as per the invention ensures that the lighting device (2) turns said angle α₂ to carry out the correction illustrated in Figures 2 and 4, in such a way that the lighting distribution remains stable and horizontal in spite of the lateral tilting α of the motorcycle.

Preferably, the value of the rotation angle α₂ is the same as the value of the lateral tilting angle α plus a small positive or negative error margin. Therefore, the angular rotation value transmitted to the connection element (9) is equal to, or very similar to, the lateral tilting angle α of the motorcycle, allowing for an optimum stabilization of the front lighting.

Optionally, the motor (4) is a servomotor. A servomotor is an electric motor that can be controlled in terms of speed and position. It comprises a controlled position arrow or controlled-position shaft that can be moved to specific angular positions based on a coded signal. To do so, the servomotor usually comprises a direct current motor, a gearbox and control electronics. The servomotor uses pulse width modulation, in such a way that the control electronics of the servomotor responds to the pulse width of the modulated signal. The duration of the pulse indicates the control electronics whether the servomotor motor should remain in a rest position or move in a clockwise or anti-clockwise direction. The duration of the pulse also determines the number of turns required by the servomotor motor to place the controlled-position shaft in the desired angular position. The motor rotation is transmitted to the controlled-position shaft of the servomotor via the gearbox. Using a servomotor is advantageous because of its beneficial features in terms of effectiveness in controlling the shaft position, its small size and reduced energy consumption. In the embodiment of Figure 5, the motor (4) is a servomotor, and the shaft (7) that is coupled to the gear system (8) is the controlled-position shaft of the servomotor; the coded signal (6) is a pulse signal from which the servomotor control electronics decodifies the rotation angle α₁ to position the servomotor's controlled-position shaft.

Figure 7 shows an exploded view in which details of the electromechanical device (1) of Figure 5 can be seen. As can be observed in this figure, the electromechanical device (1) optionally comprises a frame (10) that can be made up of two or more parts (11) and which houses the gear system (8). In the embodiment of Figure 7, the frame (10) consists of only two parts (11) which may be connected to each other, for example, using bolts (30) or other securing means. The frame (10) allows the gear system (8) to remain enclosed in its interior, protected and isolated from the exterior; the frame (10) also serves as a support for the assembly of the motor (4) and for the assembly of other components of the electromechanical device (1). In the embodiment of Figure 7, the motor (4) is mounted on the frame (10) using bolts (30). The processing unit (5) and the sensor set (3) are implemented in control electronics (12), whereby these control electronics (12) are housed in an electronic box (13) which is also mounted on the frame (10) using bolts (30).

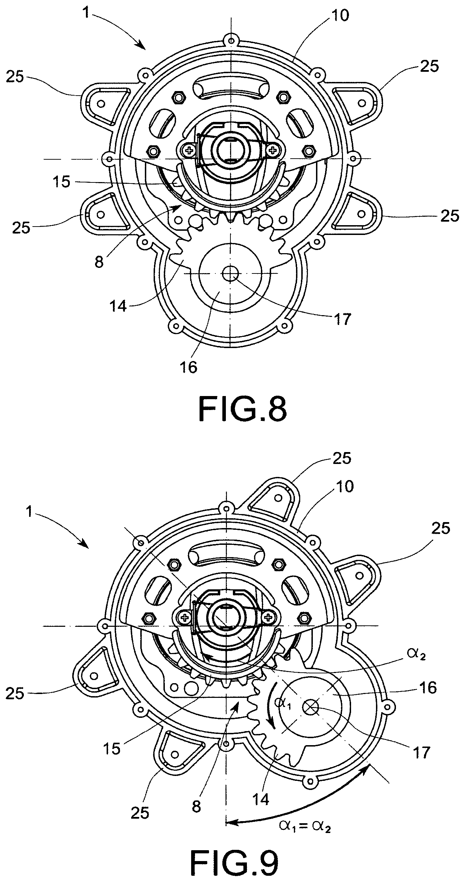

As can also be seen in Figure 7, the gear system (8) optionally comprises a first gear or sprocket (14) and a second gear or crown (15) housed between the two parts (11) of the frame (10). In mechanics, gear is understood to be a movement transmission mechanism, implemented by at least two cogs, for the transmission of an angular movement from a first rotating shaft or driving shaft to a second rotating shaft or driven shaft. Specifically, in the embodiment in Figure 7, the sprocket (14) is coupled to the shaft (7) of the motor (4) and represents the driving part of the gear system (8). The rotation angle α₁ exerted on the controlled-position shaft of the servomotor is transmitted to the sprocket (14) which turns simultaneously with the shaft of the servomotor. On the other hand, the crown (15) is the part of the gear system (8) that is connected, coupled or assembled to the lighting device (2) via the connection element (9). In this way, when the sprocket (14) turns together with the controlled-position shaft of the servomotor, the sprocket (14) transmits its angular movement to the crown (15) which is, therefore, the driven part of the gear system (8). The crown (15), in turn, forces the lighting device (2) to turn to rotation angle α₂. In the embodiment of Figure 7, the rotation angle α₂ is equal to the rotation angle α₁; in other words, the rotation ratio between the sprocket (14) and the crown (15) is 1:1. Figures 8, 9 and 10 show the relative position between the sprocket (14) and the crown (15) of the gear system (8) of the electromechanical device (1) of Figure 7 when this gear system (8) is found respectively: in a rest position (motorcycle on a straight-line path); with an anti-clockwise rotation angle α₁=α₂ of 45° (to compensate a lateral tilting α of the motorcycle when turning to the left); and with a clockwise rotation angle α₁=α₂ of 45° (to compensate lateral tilting α of the motorcycle when turning to the right). The rotation angle α₁ exerted by the sprocket (14) is equal to, or very similar to, that of the tilting angle of the motorcycle α, differentiated at most by a small error margin. Other embodiments are contemplated in which the ratio between angles α₁ and α₂ may be different than 1:1 depending on alternative designs of the gear system (8) which are also valid for the invention. These embodiments will be valid as long as the rotation angle α₂ applied to the lighting device (2) appropriately compensate the adverse effect caused by the tilting of the motorcycle when taking curves.

Optionally, the coupling between the shaft (7) and the sprocket (14) is carried out by means of a disc (16), as shown in the embodiment of Figures 5 and 7, which is adhered to the sprocket (14) by means of an adhesive material. The method of union or adhesion of the disc (16) to the sprocket (14) of the gear system (8) is not relevant for the invention, whereby it may be secured with bolts or other securing elements. In addition, the frame (10) of the embodiment of the figures includes a hole (17) in its lower part to facilitate coupling between the disc (16) and the shaft (7) of the motor (4). Other embodiments are also contemplated in which the coupling between the shaft (7) and the gear system (8) is carried out by elements other than the disc (16), provided that these elements fulfil the function of enabling the shaft (7) and the gear system (8) to be properly coupled.

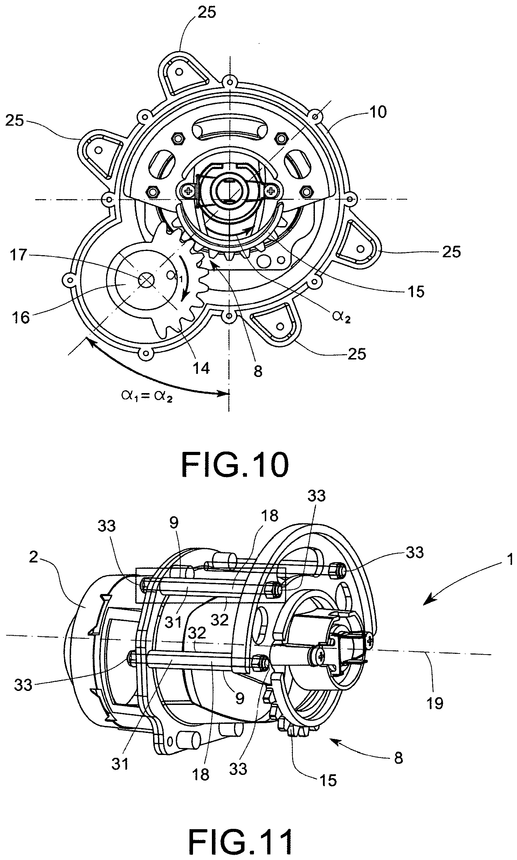

On the other hand, in the embodiment in Figures 5 and 7, the depicted lighting device (2) is a lighting device with ellipsoidal optics. In addition, the connection element (9) of the present embodiment optionally comprises a set of longitudinal links (18). Figure 11 shows the connection between the crown (15) and the lighting device (2) via this set of links (18). As shown in Figure 11, the links (18) are placed longitudinally around the rotation shaft (19) of the crown, between the crown (15) and the lighting device (2). Each link (18) in Figure 11 comprises a threaded rod (31) passing through a metallic tube (32) so that the connection between the crown (15) and the lighting device (2) is completed with a series of threaded nuts (33) at both ends of the links (18). By means of this system, appropriate coupling between the lighting device (2) and the gear system (8) is achieved using simple and freely available securing methods. The number and exact layout of the links (18) is not relevant for the invention, whereby alternative embodiments of the electromechanical device (1) are contemplated in which the configuration of the links (18) can vary in order to adapt to the specific characteristics (e.g. to the shape and size) of the lighting device used in each case. In this respect, other embodiments of the invention are valid provided that an appropriate connection between the lighting device (2) and the gear system (8) is achieved.

On the other hand, the type of lighting device used is not relevant for the invention, whereby other lighting devices may be used, such as lighting reflectors or other lighting devices on the market, to which the electromechanical device (1) can be coupled in accordance with the invention using the appropriate connection element. Therefore, other embodiments of the invention are contemplated in which the configuration of the connection element is completely different to the configuration of the connection element (9) in the figures. These connection means or elements may be different ones; for example, they may be different to the links (18), as long as these elements allow the joint rotation of the lighting device and the gear system (8).

Optionally, the electromechanical device (1) comprises an anchoring or fixing element (25) to mount the assembly made up of the lighting device (2) and the electromechanical device (1) on the motorcycle. In the embodiment shown in Figures 5 to 10, the fixing element (25) is made up of four lugs or projections with respective holes for the securing or assembly of the set. These holes on the fixing element (25) are also optionally used for assembling, prior to the use of the motorcycle, the adjustment system or means for adjusting the horizontal and vertical orientation of the light beam emitted by the lighting device (2). In conventional motorcycles, this adjustment is commonly implemented by manually adjusting bolts using a screwdriver.

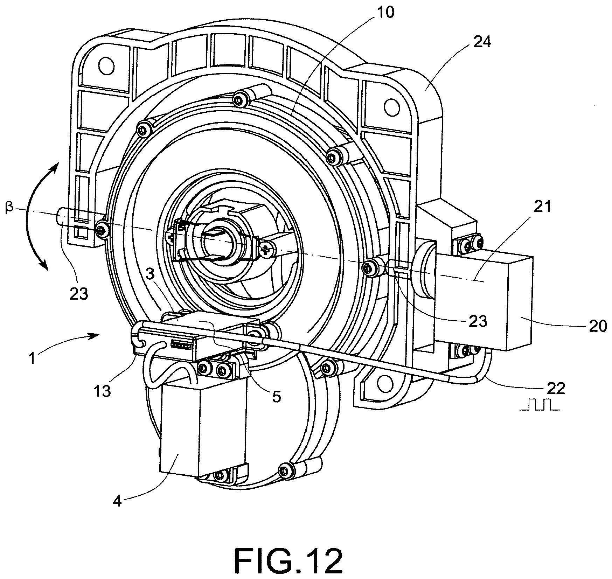

In a particularly advantageous embodiment of the electromechanical device (1), the processing unit (5) generates a second coded signal (22) based on an acceleration value experienced by the motorcycle and detected by the sensor set (3). Figure 12 shows a second embodiment of an electromechanical device (1) as per the invention which includes these characteristics; the acceleration value is detected by the accelerometers on the sensor set (3). As shown in Figure 12, the electromechanical device (1) comprises a second motor (20) which in turn comprises a rotating shaft (21) arranged in a transverse direction. The shaft (21) is substantially parallel to the plane of the road on which the motorcycle travels and the angular position of the shaft (21) is adjustable using the second coded signal (22) generated by the processing unit (5). Furthermore, the electromechanical device (1) comprises an auxiliary part (24); the rest of the components of the electromechanical device (1) (i.e. the sensor set (3), the processing unit (5), the motor (4) and the gear system (8)) are jointly rotational with respect to the auxiliary part (24) and about the shaft (21). In the embodiment shown in Figure 12, the auxiliary part (24) incorporates the second motor (20), and the frame (10) comprises a rotating shaft (23) made up of two sections, which is coupled to the shaft (21) of the second motor (20). The auxiliary part (24) is mounted on this rotating shaft (23) facilitating the connection and the coupling between rest of elements, namely, the rotating shaft (23), the second motor (20) and the frame (10).

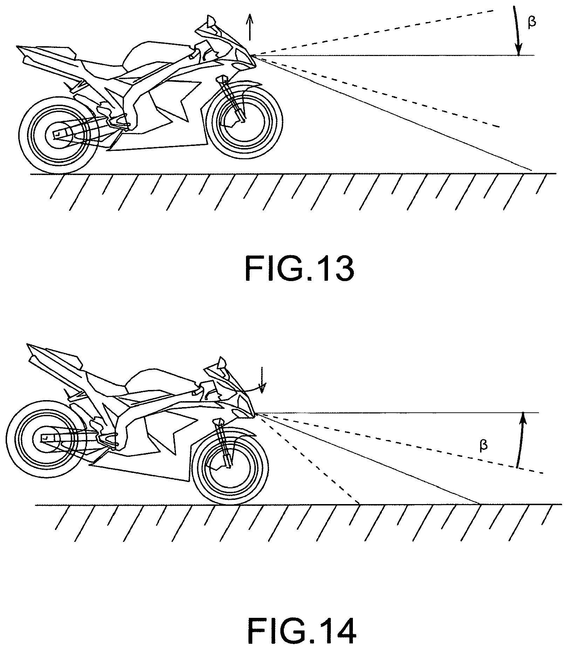

By means of these additional technical characteristics, the processing unit (5) calculates a rotation angle β based on a certain acceleration value detected by the sensor set (3), and this rotation angle β is transmitted to the shaft (21) of the second motor (20) through the second coded signal (22). The unit made up of the electromechanical device (1) and the lighting device (2) rotates or basculates, with respect to the auxiliary part (24) and around the shaft (21), this rotation angle β. As this shaft (21) is positioned on a plane that is substantially parallel to the plane of the road, the rotation angle β is contained in a plane perpendicular to the shaft (21) and substantially perpendicular to the plane of the road. This embodiment is particularly advantageous because it provides the added function of automatically correcting the distribution of the front lighting during the motorcycle's acceleration and braking processes. Figures 13 and 14 illustrate this problem, showing a motorcycle when accelerating and braking, respectively. As shown in these figures, the front part of the motorcycle undergoes a rise or fall, respectively, with respect to the horizontal position, causing vertical pitching of the lighting distribution in the same direction (broken line in Figures 13 and 14), with the subsequent risk of dazzling and traffic accidents, as previously mentioned. The electromechanical device (1) in Figure 12 solves this situation as the set made up of the electromechanical device (1) and lighting device (2) are turned rotation angle β to correct the distribution of the front lighting (marked with a thick continuous line in Figures 13 and 14) during the motorcycle's acceleration and braking processes.

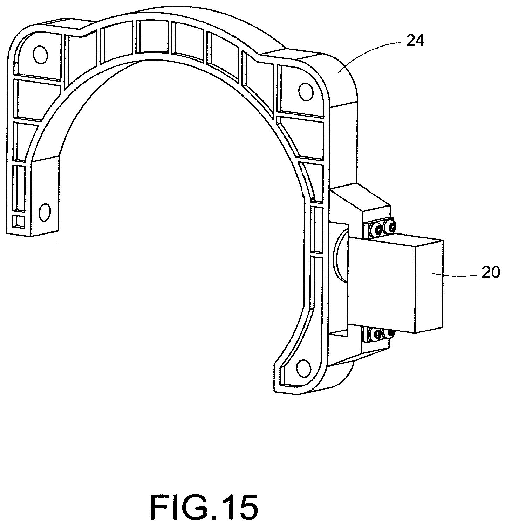

Figure 15 shows the auxiliary part (24) and the second motor (20) separated from the set. The auxiliary part (24) of the embodiment in Figures 12 and 15 has the added function of providing the securing or assembly of the set made up of the electromechanical device (1) and the lighting device (2) on the motorcycle.

Optionally, the second motor (20) is also a servomotor due to the advantages mentioned heretofore.

## Claims

1. Electromechanical device (1) for stabilizing a motorcycle front lighting, wherein said front lighting comprises a front lighting device (2) that emits a light beam, **characterised in that** it comprises:
- a sensor set (3) that comprises tilting angle sensors, for the detection of a lateral tilting angle α experienced by the motorcycle,
- a processing unit (5), in electrical communication with the sensor set (3), and comprising a memory that stores instructions for generating a coded signal (6) based on the lateral tilting angle α detected by the sensor set (3),
- a motor (4), comprising a rotating shaft (7) arranged in a longitudinal direction, wherein said shaft (7) presents an angular position that is adjustable based on the coded signal (6) generated by the processing unit (5) and,
- a gear system (8) coupled to the shaft (7) of the motor (4), wherein said gear system (8) comprises a connection element (9) for connecting the electromechanical device (1) to the lighting device (2) to rotate jointly, and wherein said gear system (8) is configured to transmit a rotation of the shaft (7) of the motor (4) to a rotation of the connection element (9).

2. Electromechanical device (1), according to claim 1, **characterised in that** the sensor set (3) comprises at least one accelerometer and at least one gyroscope.

3. Electromechanical device (1), according to claim 1, **characterised in that** the angular rotation value transmitted to the connection element (9) is equal to the lateral tilting angle α plus an error margin.

4. Electromechanical device (1), according to claim 1, **characterised in that** the motor (4) is a servomotor.

5. Electromechanical device (1), according to claim 1, **characterised in that** it comprises a frame (10), wherein said frame (10) comprises at least two parts (11), and **in that** the gear system (8) is comprised in the interior of this frame (10).

6. Electromechanical device (1), according to claim 1, **characterised in that** the gear system (8) comprises a sprocket (14) and a crown (15), wherein the sprocket (14) is coupled to the shaft (7) of the motor (4) and wherein the crown (15) is connected to the lighting device (2) by means of the connection element (9), so that the sprocket (14), on turning jointly with the shaft (7), transmits its angular movement to the crown (15) which, in turn, causes the connection element (9) to tu rn.

7. Electromechanical device (1), according to claim 6, **characterised in that** the coupling between the shaft (7) and the sprocket (14) is via a disc (16).

8. Electromechanical device (1), according to claim 6, **characterised in that** the connection element (9) comprises a set of links (18) that are placed longitudinally between the crown (15) and the lighting device (2).

9. Electromechanical device (1), according to claim 1, **characterised in that** it comprises a fixing element (25) for the assembly of the set made up of the lighting device (2) and the electromechanical device (1) on the motorcycle.

10. Electromechanical device (1), according to claim 9, **characterised in that** the fixing element (25) comprises means for the manual adjustment of the horizontal and vertical orientation of the light beam emitted by the lighting device (2).

11. Electromechanical device (1), according to claim 1, **characterised in that** the sensor set (3) comprises acceleration sensors to detect an acceleration experienced by the motorcycle, **in that** the memory of the processing unit (5) stores instructions to generate a second coded signal (22) based on the acceleration detected by the sensor set (3), and **in that** it further comprises:
- a second motor (20) that comprises a rotating shaft (21) arranged in a transverse direction, wherein said shaft (21) presents an adjustable angular position based on the second coded signal (22) generated by the processing unit (5), and
- an auxiliary part (24) with respect to which the sensor set (3), the processing unit (5), the motor (4) and the gear system (8) are arranged rotationally about the shaft (21), wherein said auxiliary part (24) incorporates the second motor (20).

12. Electromechanical device (1), according to claim 11, **characterised in that** the second motor (20) is a servomotor.

13. Stabilization method of the front lighting of a motorcycle, wherein said front lighting comprises a front lighting device (2) that emits a light beam, **characterised in that** comprises the steps of:
- detecting a lateral tilting angle α experienced by the motorcycle via a sensor set (3) that comprises tilting angle sensors and acceleration sensors,
- calculating a rotation angle α₁, based on the lateral tilting angle α detected by the sensor set (3), via a processing unit (5) in electrical communication with the sensor set (3),
- generating a coded signal (6) with information regarding said rotation angle α₁,
- transmitting the coded signal (6) to a motor (4) that comprises a rotating shaft (7) arranged in a transverse direction, wherein said shaft (7) presents an angular position that is adjustable based on said coded signal (6),
- rotating the shaft (7) of the motor (4) an angle equal to α₁, and
- transmitting, via a gear system (8) connected to the shaft (7) of the motor (4) and to the lighting device (2), the shaft (7) rotation to the lighting device (2) so that the lighting device (2) turns an angle α₂.

14. Method, according to claim 13, **characterised in that** it further comprises the steps of:
- detecting an acceleration experienced by the motorcycle via the sensor set (3),
- calculating, by means of the processing unit (5), a rotation angle β based on the acceleration detected by the sensor set (3),
- generating a coded signal (22) with information regarding said rotation angle β,
- transmitting the coded signal (22) to a second motor (20) that comprises a rotation shaft (21) arranged in a transverse direction, wherein said shaft (21) presents an angular position that is adjustable based on said coded signal (22),
- rotating the shaft (21) of the second motor (20) an angle equal to β, and
- transmitting the shaft (21) rotation to the lighting device (2), via a coupling between the shaft (21) and the lighting device (2), so that the lighting device (2) turns an angle equal to β.
